# EUROPEAN PATENT APPLICATION

(11) **EP 3 173 995 A1**
(43) Date of publication of application: **31.05.2017**
(21) Application number: 16171951.3
(22) Date of filing: 30.05.2016
(51) Int. Cl.: G06Q 10/10, G06Q 50/00, H04M 1/725

(54) **SYSTEMS AND METHODS FOR SHARING CONTENT**

(30) Priority: 24.11.2015 US 201514951280; 25.11.2015 WO PCT/US2015/062796
(71) Applicant: Facebook, Inc., Menlo Park, CA 94025 (US)
(72) Inventor: Ragavan, Srinivasan, Menlo Park, CA 94025 (US); Bernstein, Aaron, Samuel, Menlo Park, CA 94025 (US); Leonard, Pryor William, Menlo Park, CA 94025 (US)
(74) Representative: Schröer, Gernot H.

(57) **Abstract**

Systems, methods, and non-transitory computer-readable media can determine at least one content item to be shared. One or more applications to share the content item can be determined. The applications can be ranked based at least in part on one or more criteria. The ranked applications can be provided as a set of options. A user operating the computing device is able to select at least one of the options to share the content item through the application associated with the option.

## Description

### FIELD OF THE INVENTION

The present technology relates to the field of content sharing. More particularly, the present technology relates to techniques for sharing content between computing devices.

### BACKGROUND

Today, people often utilize computing devices (or systems) for a wide variety of purposes. Users can operate their computing devices to, for example, interact with one another, create content, share content, and access information. Under conventional approaches, a user can operate a computing device to share content items (e.g., images, videos, audio files, etc.) with computing devices of other users.

Typically, when sharing a content item, the user operating the computing device can be presented with one or more options that each reference a software application for sharing the content item, such as an e-mail application and/or a text messaging application, to name some examples. The user can select one of the options to share the content item using the corresponding software application and can also specify one or more recipients with whom the content item is to be shared.

### SUMMARY

Various embodiments of the present disclosure can include systems, methods, and non-transitory computer readable media configured to determine at least one content item to be shared. One or more applications to share the content item can be determined. The applications can be ranked based at least in part on one or more criteria. The ranked applications can be provided as a set of options. A user operating the computing device is able to select at least one of the options to share the content item through the application associated with the option.

In an embodiment, a determination is made that the user operating the computing device has selected an option to share the content item, wherein the option is provided through an interface of an application executing on the computing device.

In an embodiment, subject matter represented in the content item to be shared can be analyzed. A determination is made that a first application in the one or more applications is preferred for sharing content items based at least in part on the analyzed subject matter. The first application is ranked higher than other applications in the one or more applications.

In an embodiment, a respective name of the at least one entity is provided as a suggested recipient of the content item.

In an embodiment, text to be communicated with the content item is provided, the text being determined based at least in part on the analyzed subject matter.

In an embodiment, a preference for the first application is determined as specified by the user operating the computing device.

In an embodiment, a determination is made that a number of times that the user operating the computing device has launched the first application to share content items satisfies a threshold value.

In an embodiment, a respective count for each application in the one or more applications is determined, the respective count indicating a number of times that the user operating the computing device has launched the application to share content items and the applications are ranked based at least in part on the respective counts.

In an embodiment, a content type corresponding to the content item to be shared is determined. A respective count for each application in the one or more applications is determined, the respective count indicating a number of times that the user operating the computing device has launched the application to share content items that correspond to the content type. The applications are ranked based at least in part on the respective counts.

In an embodiment, a geo fence corresponding to the computing device from which the content item is being shared is determined. A determination is made that a first application in the one or more applications is used to share content items while the computing device is in the geo fence. The first application is ranked higher than other applications in the one or more applications.

In an embodiment, a time of day at which the content item is being shared is determined. A determination is made that a first application in the one or more applications is used to share content items during the time of day. The first application is ranked higher than other applications in the one or more applications.

In an embodiment, one or more computer-readable non-transitory storage media embody software that is operable when executed to perform a method according to the invention or any of the above mentioned embodiments.

In an embodiment, a system comprises: one or more processors; and at least one memory coupled to the processors and comprising instructions executable by the processors, the processors operable when executing the instructions to perform a method according to the invention or any of the above mentioned embodiments.

In an embodiment, a computer program product, preferably comprising a computer-readable non-transitory storage media, is operable when executed on a data processing system to perform a method according to the invention or any of the above mentioned embodiments.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

**FIGURE 1** illustrates an example system including an example content sharing module configured to suggest software applications for sharing content items, according to an embodiment of the present disclosure.
**FIGURE 2** illustrates an example sharing suggestions module configured to suggest software applications for sharing content items, according to an embodiment of the present disclosure.
**FIGURE 3** illustrates an example of an interface for sharing content items, according to an embodiment of the present disclosure.
**FIGURES 4A-B** illustrates an example of an interface providing options for sharing content items through different software applications, according to various embodiments of the present disclosure.
**FIGURE 5** illustrates an example of an interface for sharing content items including automatically generated text, according to various embodiments of the present disclosure.
**FIGURE 6** illustrates an example method for determining software applications for sharing content items, according to an embodiment of the present disclosure.
**FIGURE 7** illustrates a network diagram of an example system including an example social networking system that can be utilized in various scenarios, according to an embodiment of the present disclosure.
**FIGURE 8** illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR SUGGESTING APPLICATIONS FOR SHARING CONTENT

People use computing devices (or systems) for a wide variety of purposes. As mentioned, under conventional approaches, a user can utilize a computing device to share content items (e.g., documents, images, videos, audio, etc.) with other users. Typically, when sharing a content item, the user operating the computing device can be presented with one or more options for sharing the content item through a particular software application that is installed on the computing device, such as an e-mail application or text messaging application.

Under conventional approaches, the options for sharing content items through a computing device (including the order in which such options are presented) are typically pre-determined without regard to the user operating the computing device. For example, when an option to share a content item is selected, the computing device can present, through a display interface, a set of options to share the content item through a text messaging application, an e-mail application, a cloud-based sharing platform application, and/or applications corresponding to one or more social networks. In conventional approaches, the same set of options are presented irrespective of the user and/or the content item being shared. If the user operating the computing device wants to share the content item through a particular application that is different from the applications referenced by the set of options, then the user has to manually configure the computing device to provide an option for sharing content items through that particular application. As used herein, the term "application" generally refers to software applications, programs, and/or mediums that can be accessed, executed, and utilized on a computing device.

An improved approach overcomes the foregoing and other disadvantages associated with conventional approaches. In various embodiments, when a user operating a computing device attempts to share content items, applications for sharing the content items can automatically be suggested to the user based at least in part on a variety of factors, such as a user preference for sharing content items through certain applications, the content items being shared, the type of content items being shared, and/or the entities with whom the content items are being shared, to name some examples. The order in which the applications are suggested can also be customized based, in part, on such factors, so that the applications through which the user is most likely to share the content items are ordered, or ranked, before other, less preferred, applications for sharing. As a result, the user can quickly and easily share the content items by selecting the option for one of the preferred applications.

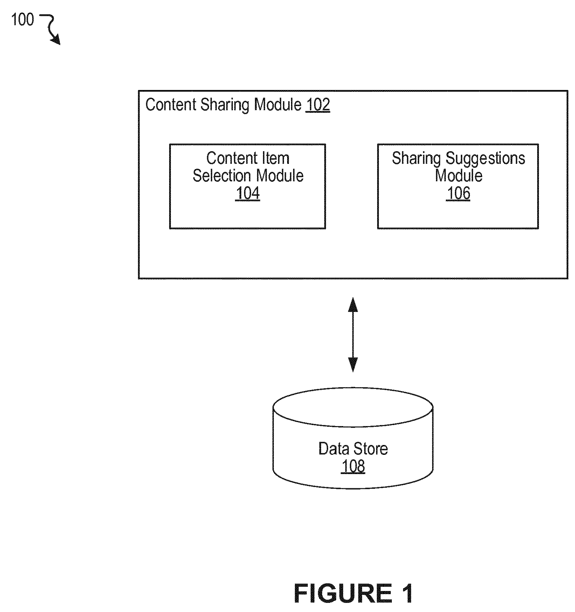

**FIGURE 1** illustrates an example system 100 including an example content sharing module 102 configured to suggest applications for sharing content items, according to an embodiment of the present disclosure. As shown in the example of **FIGURE 1****,** the content sharing module 102 can include a content item selection module 104 and a sharing suggestions module 106. In some instances, the example system 100 can include at least one data store 108. The components (e.g., modules, elements, etc.) shown in this figure and all figures herein are exemplary only, and other implementations may include additional, fewer, integrated, or different components. Some components may not be shown so as not to obscure relevant details.

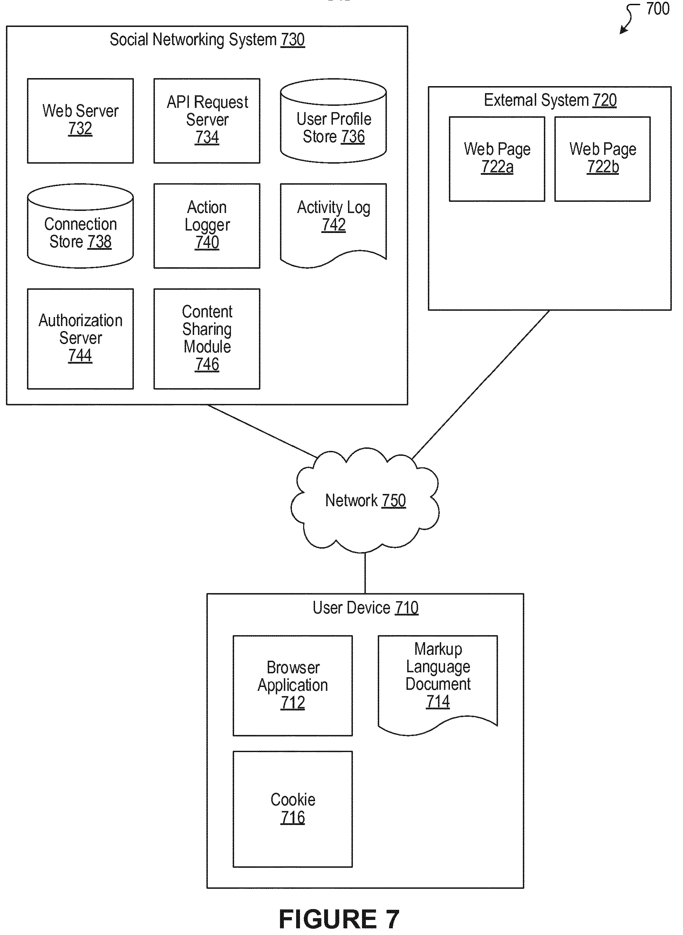

In some embodiments, the content sharing module 102 can be implemented, in part or in whole, as software, hardware, or any combination thereof. In general, a module, as discussed herein, can be associated with software, hardware, or any combination thereof. In some implementations, one or more functions, tasks, and/or operations of modules can be carried out or performed by software routines, software processes, hardware, and/or any combination thereof. In some cases, the content sharing module 102 can be implemented, in part or in whole, as software running on one or more computing devices or systems, such as on a user computing device or client computing system. For example, the content sharing module 102, or at least a portion thereof, can be implemented as or within an application (e.g., app), a program, or an applet, etc., running on a user computing device or a client computing system, such as the user device 710 of **FIGURE 7****.** Further, the content sharing module 102, or at least a portion thereof, can be implemented using one or more computing devices or systems that include one or more servers, such as network servers or cloud servers. In some instances, the content sharing module 102 can, in part or in whole, be implemented within or configured to operate in conjunction with a social networking system (or service), such as the social networking system 730 of **FIGURE 7****.** It should be understood that there can be many variations or other possibilities.

As mentioned, in various embodiments, the content sharing module 102 can be implemented in a computing device and be configured to provide one or more suggestions for using certain applications for sharing content items.

The content item selection module 104 can be configured to process user selections of content items to be shared through a given interface. For example, in various embodiments, the user can access an interface that includes, or references, various content items stored on the computing device. In such embodiments, the user operating the computing device can interact with the interface, for example, by selecting an option, to share one or more content items with one or more recipients. The content item selection module 104 can determine, based on the user selections, which content items have been selected for sharing. In another example, the content item selection module 104 can determine which content items are to be shared when the user selects and/or specifies the content items through a browser (e.g., file browser, web browser, etc.), for example, by selecting an option to share content items.

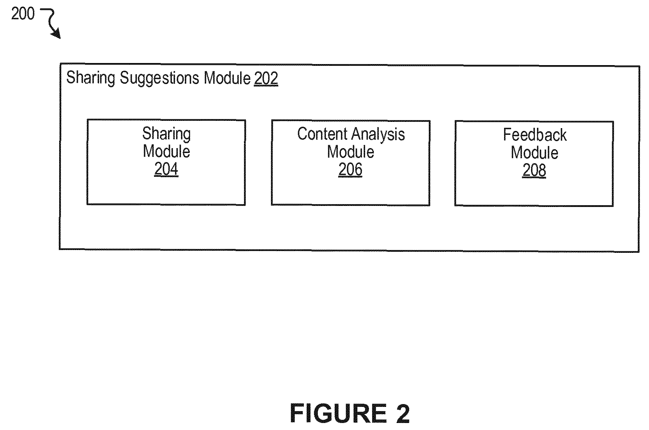

The sharing suggestions module 106 can be configured to determine which applications to suggest to the user for use in sharing content items. For example, when the user selects a content item to be shared, as determined by the content item selection module 104, the sharing suggestions module 106 can provide one or more applications for sharing the content item. As mentioned, under conventional approaches, when the user selects the content item to be shared, the computing device can provide the user with a static set of options to share the content item. These options may include, for example, a text messaging application, an e-mail application, a cloud-based sharing platform application, and/or applications corresponding to one or more social networks. In various embodiments, the sharing suggestions module 106 can determine, based on various factors, one or more applications for sharing the content item. In some embodiments, these factors can include, for example, a user preference for certain software application(s) and/or sharing mediums, the content item(s) being shared, the type of content item(s) being shared, and the entities with whom the content item(s) is being shared, to name some examples. More details regarding the sharing suggestions module 106 will be provided below in reference to **FIGURE 2****.**

In some embodiments, the content sharing module 102 can be configured to communicate and/or operate with the at least one data store 108 in the example system 100. The at least one data store 108 can be configured to store and maintain various types of data. In various embodiments, the at least one data store 108 can store data relevant to function and operation of the content sharing module 102. One example of such data is usage information of the different software applications and/or mediums by a user on a computing device. In some implementations, the at least one data store 108 can store information associated with the social networking system (e.g., the social networking system 730 of **FIGURE 7**). The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 108 can store information associated with users, such as user identifiers, user information, profile information, user specified settings, content produced or posted by users, and various other types of user data. It should be appreciated that there can be many variations or other possibilities.

**FIGURE 2** illustrates an example sharing suggestions module 202 configured to suggest software applications for sharing content items, according to an embodiment of the present disclosure. In some embodiments, the sharing suggestions module 106 of **FIGURE 1** can be implemented with the sharing suggestions module 202. As shown in the example of **FIGURE 2****,** the sharing suggestions module 202 can include a sharing module 204, a content analysis module 206, and a feedback module 208.

In various embodiments, the sharing module 204 can be configured to determine and recommend a set of applications for sharing content items between computing devices. For example, when a user operating a computing device attempts to share content items, the user can be presented with one or more options that each reference a different application for sharing the content items. The user can interact with the interface to select an option that references an application to share the content items using that application. In various embodiments, the sharing module 204 can be configured to present and/or modify the options presented to the user for sharing content items using operating system hooks, system calls, and/or application programming interfaces (APIs), to name some examples.

In some embodiments, the sharing module 204 can be implemented so that its features can be provided through an application running on the computing device. For example, the user may be interacting with a content creation application (e.g., an image editor) that is running on the computing device. The user can edit a content item using the content creation application and may then want to share the edited content item with others. In this example, the sharing module 204 may be utilized to provide a set of options referencing different applications through which the edited content item can be shared and, further, the set of options can be ranked so that applications that the user prefers to use for sharing content items can be ranked higher than other applications. In some embodiments, applications utilizing features provided by the sharing module 204 may need to obtain and provide the user's credentials through a login portal.

As mentioned, the applications that are conventionally made available to users for sharing content items may not reflect the applications that are preferred by the users for sharing content items. For example, when sharing a content item, a user may conventionally be provided with a set of options to share the content item through a text messaging application, an e-mail application, and a social networking application. However, the user may prefer a different application than the one included in the set of options. In this example, the user is required to expend additional time and effort to add the preferred application to the list of applications that are made available through the interface for sharing content. Additionally, once added, the user has to expend additional time and effort to locate the preferred application in the list of applications that are provided through the interface.

In various embodiments, the sharing module 204 can determine an order (e.g., rank) of applications that can be utilized for sharing content items with other entities or users. This ordering can be determined in various ways. In some embodiments, the ordering can be determined based, in part, on a user preference for sharing content items using certain applications. For example, the sharing module 204 may determine, for example, based on a number of times launched (e.g., executed) and/or frequency of use, that the user prefers to share images using a specific application "XYZ Chat" over other applications, such as text messaging or e-mail. In this example, when the user selects an option to share an image, the user can be provided with a set of options referencing different applications through which the image can be shared and, in this example, the set of options can be ordered to include a first option referencing the application "XYZ Chat", followed by options referencing a text messaging application and an e-mail application.

In some embodiments, the ordering of applications that is presented to the user can be determined based, in part, on the content items being shared. For example, the content analysis module 206 may determine, for example, using face recognition techniques, that the content item to be shared is an image of a group of entities, or individuals, and can determine that the user prefers to share images of individuals in the group (or with individuals of the group) through a particular application "UX Messenger". In this example, the sharing module 204 can present a set of options for sharing the content item in an order that includes a first option referencing the application "UX Messenger", followed by options referencing other applications, such as a text messaging application and an e-mail application. In some instances, the set of options providing application recommendations can be based, in part, on the relationships between the user and entities represented in content items, which may be determined, for example, by obtaining a respective affinity measurement that measures the strength of the relationship between the user and that entity, for example, in a social networking environment.

In another example, the content analysis module 206 may determine that the content item to be shared is a document, or text, that is work-related (e.g., a memo) and that the user prefers to share such work-related documents through a work e-mail account. In this example, the sharing module 204 can present a set of options for sharing the content item in an order that includes a first option referencing a work e-mail application followed by options referencing other applications.

In some embodiments, the ordering of applications that is presented to the user can be determined based, in part, on the type of content items being shared. For example, the sharing module 204 may determine that the user prefers to share redlined documents using an application "XYZ Share Doc". In this example, when such a content item is being shared, the sharing module 204 can present a set of options for sharing the content item in an order that includes a first option referencing the application "XYZ Share" followed by options referencing other applications. Similarly, in some embodiments, the ordering of applications may be determined based, in part, on a size or length of the content item being shared. For example, the user may prefer to share content items that are large in size (e.g., a high resolution image or video) through the "UX Messenger" application and content items that are small in size (e.g., a low resolution image or video) through a text messaging application. In this example, when content items are being shared, the sharing module 204 can present a set of options for sharing the content item in an order in which the "UX Messenger" application and the text messaging application are ranked based, in part, on the size or length of the content item being shared.

In some embodiments, the ordering of applications that is presented to the user can be determined based, in part, on the geographic location (e.g., geo-fence) from which the content items are being shared. For example, the user may use an application A to share content items while at work and an application B when sharing content items while at home. In this example, the sharing module 204 can present a set of options for sharing content items in an order that prioritizes application A when the user is sharing content items while at work and application B when the user is sharing content items while at home. Similarly, in some embodiments, the ordering of applications that is presented to the user can be determined based, in part, on the time of day during which content items are being shared. In some embodiments, the ordering of applications that is presented to the user can be determined based, in part, on metadata associated with the content items are being shared.

In some embodiments, the ordering of applications that is presented to the user can be determined based, in part, on the entities with whom the content items are being shared. For example, the sharing module 204 may determine that an image is being shared by the user with family members and that the user prefers to use the "XYZ Chat" application to share content items with such individuals. In this example, the sharing module 204 can present a set of options for sharing the content item in an order in which the "XYZ Chat" application is ranked higher than other applications that may be available for sharing content items.

In some embodiments, the sharing module 204 can provide one or more suggested entities with whom certain content items may be shared. For example, the content analysis module 206 can be configured to analyze content items being shared to determine one or more entities with whom the content item may be shared and provide the names of such entities as suggestions. In various embodiments, the content analysis module 206 can analyze the content represented by the content items and/or metadata associated with the content items being shared to make such determinations. In the example of images and videos, for example, the content analysis module 206 can apply various techniques, such as face recognition, to determine the likely entities with whom the content items may be shared. Similarly, for documents, the content analysis module 206 can analyze the document text to determine the likely entities with whom the content items may be shared. In various embodiments, the content analysis module 206 can be configured to perform a classification analysis on content items to determine the subject matter captured by the content items. The content analysis module 206 can perform the classification analysis by applying one or more machine learning models (e.g., content classifiers) to a content item. In particular, the content analysis module 206 can determine a probability regarding whether the content item reflects predetermined subject matter. The model can be based on any machine learning technique, including but not limited to a deep convolutional neural network.

In various embodiments, the sharing module 204 can analyze the subject matter of the content items in view of previously shared content (e.g., posts, messages, etc.) by the user to determine any text (e.g., captions) that is typically provided by the user in such context. Such text can automatically be populated in the application through which content items are being shared by the user.

The feedback module 208 can be configured to learn user application preferences, for example, by maintaining counts of applications launched, or executed, by the user while operating the computing device. The feedback module 208 can also be configured to learn such preferences based, in part, on the context in which such applications are launched, for example, using information determined by the content analysis module 206 (e.g., type of content, entities represented in the content, etc.) as well as the names of entities with whom the content items are shared. The user application preferences determined by the feedback module 208 can be used to tune the set of applications that are presented to the user when sharing a content item. This information can also be used to adjust the ordering of the applications referenced by the set of options to reflect an order in which the user's preferred applications for sharing, in a given context, are ranked higher than other applications.

In some embodiments, the set of options referencing the different applications available for sharing, as provided by the sharing module 204, can be modified so that at least one option references an application that is not installed on the user's computing device. For example, a new application that has not been installed on the computing device may be available and be suited for sharing content items. In this example, the new application can be provided as one of the options and, by selecting the option, the user can initiate an installation of the new application on the computing device. In some embodiments, the new application may be provided as an option in response to a threshold number of the user's social connections (e.g., "friends") having installed that application on their respective computing devices. In some embodiments, the new application may be provided as an option upon payment of a monetary sum, for example, to a social networking provider.

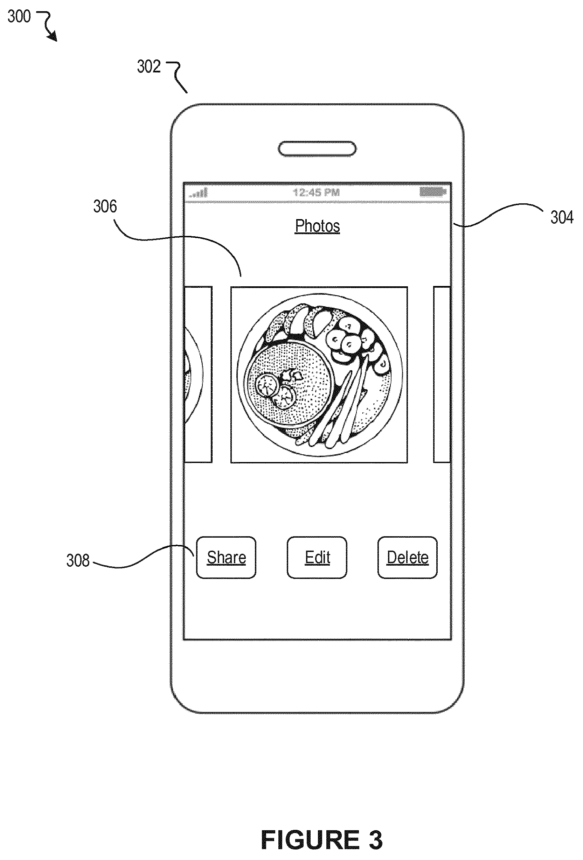

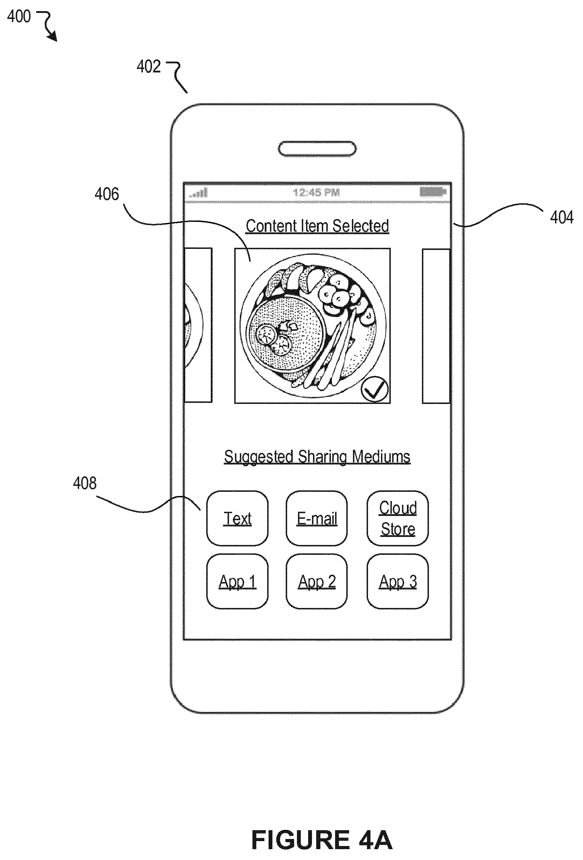

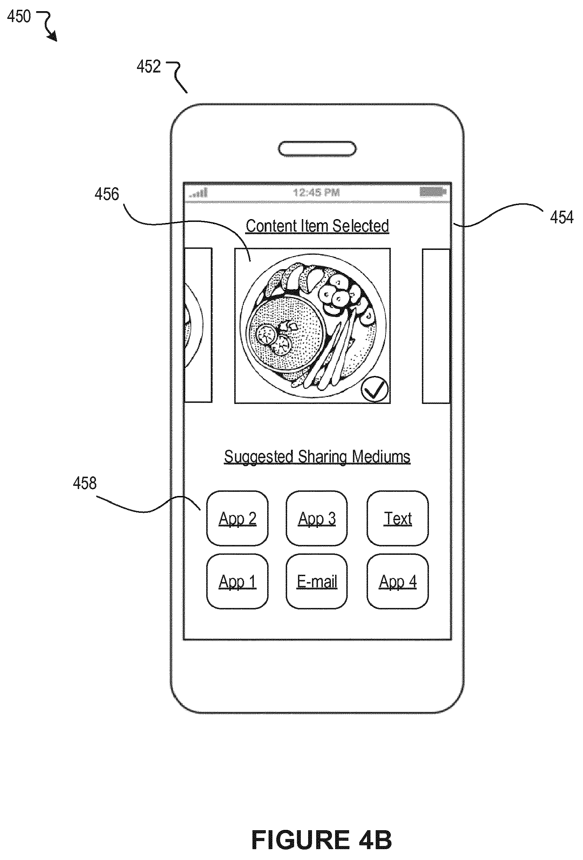

**FIGURE 3** illustrates an example 300 of an interface 304 for sharing content items 306, according to an embodiment of the present disclosure. In this example, the interface 304 is presented on a display screen of the computing device 302. Further, the interface 304 may be provided through an application (e.g., a media gallery application) running on the computing device 302. The user operating the computing device 302 can select content items 306 to be shared with other entities. To facilitate sharing of content items, the interface 304 can present an option 308 for sharing the selected content items with computing devices of various entities specified by the user. Typically, when the user attempts to share the selected content items, the interface 308 can present one or more options that each reference a different application for sharing the selected content items. The user can interact with the interface to select an option that references an application to share the content items using that application. In various embodiments, the applications referenced by the set of options provided by the interface 308 can be customized based on various factors, as illustrated in **FIGURES 4A** and **4B****.**

**FIGURE 4A** illustrates an example 400 of an interface 404 providing options 408 for sharing content items 406 through different software applications, according to various embodiments of the present disclosure. In the example of **FIGURE 4A****,** the interface 404 is presented on a display screen of the computing device 402. Further, the interface 404 may be provided through an application (e.g., a media gallery application) running on the computing device 402. The user operating the computing device 402 can select content items 406 to be shared with other entities. When sharing the selected content items, in conventional systems, the interface 404 can provide the user with a static set of options 408 for sharing the content items that are not customized, for example, for the user operating the computing device 402 or the content item 406 being shared. In this example, these options 408 include a text messaging application, an e-mail application, a cloud-based sharing platform application, an application "App 1", an application "App 2", and an application "App 3". As mentioned, under typical approaches, these same applications are presented as options 408 and in the same ordering. In various embodiments, the options presented and the ordering of such options can be customized based on various factors, as illustrated in **FIGURE 4B****.**

**FIGURE 4B** illustrates an example 450 of an interface providing options 458 for sharing content items 456 through different software applications, according to various embodiments of the present disclosure. In the example of **FIGURE 4B****,** the interface 454 is presented on a display screen of the computing device 452. As described above, the interface 454 may be provided through an application (e.g., a media gallery application) running on the computing device 452. The user operating the computing device 452 can select content items 456 to be shared with other entities, as described above in reference to **FIGURE 4A****.** However, in the example of **FIGURE 4B****,** when sharing the selected content items, the interface 454 is illustrated as providing a customized set of options 458 for sharing the content items. As described above, this set of options 458 can be customized based on a variety of factors including, for example, the preferences of the user operating the computing device 452 and the content items 456 being shared. In this example, these custom options 458 include an application "App 2", an application "App 3", a text messaging application, an application "App 1", an e-mail application, and an application "App 4". As mentioned, the ranking of the set of options 458 can reflect the user's application preference for sharing the content items 456. In this example, the application "App 2" is ranked first, the application "App 3" is ranked second, the text messaging application is ranked third, the application "App 1" is ranked fourth, the e-mail application is ranked fifth, and the application "App 4" is ranked sixth.

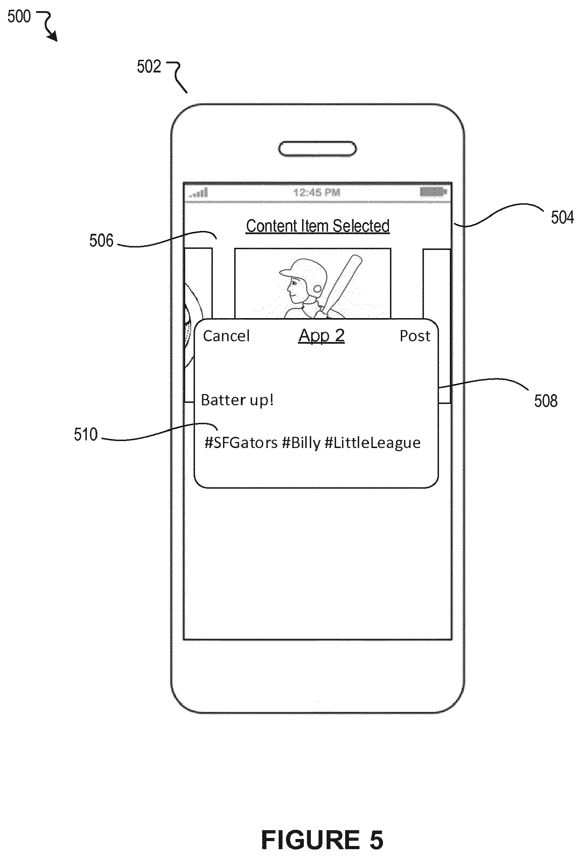

**FIGURE 5** illustrates an example 500 of an interface 504 for sharing content items 506 including automatically generated text, according to various embodiments of the present disclosure. In the example of **FIGURE 5****,** the interface 504 is presented on a display screen of the computing device 502. Further, the interface 504 may be provided through an application (e.g., a media gallery application) running on the computing device 502. The user operating the computing device 502 can select content items 506 to be shared with other entities as well as the application through which the content items 506 are to be shared with the specified entities. In various embodiments, the subject matter of the content items can be analyzed in view of previously shared content (e.g., posts, messages, etc.) by the user to determine any text (e.g., captions) that is typically provided by the user in such context and/or when sharing such subject matter, and populating such text automatically in the application 508 through which the content items 506 are being shared. In the example of **FIGURE 5****,** the user is sharing images 506 of a family member playing little league. In this example, the user's previous shares (e.g., posts) that included other similar images and any text associated with those shares can be analyzed to determine any text to be automatically populated in the post 508. In this example, the text 510 (e.g., "#SFGators #Billy #LittleLeague"), which was used by the user to describe similar content items in previous shares (e.g., posts) is illustrated as being auto-populated in the post 508.

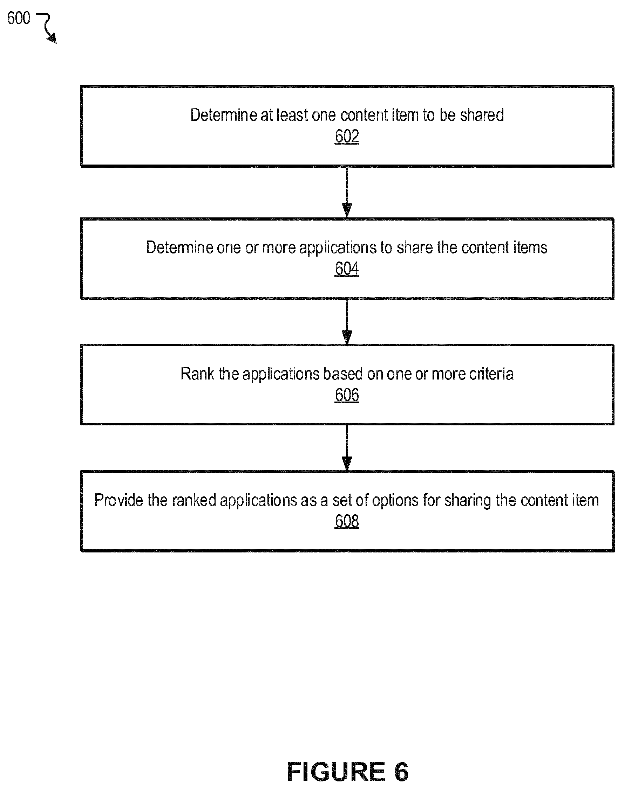

**FIGURE 6** illustrates an example method for determining software applications for sharing content items, according to an embodiment of the present disclosure. It should be appreciated that there can be additional, fewer, or alternative steps performed in similar or alternative orders, or in parallel, within the scope of the various embodiments discussed herein unless otherwise stated. At block 602, the example method 600 can determine at least one content item to be shared. At block 604, one or more applications to share the content item can be determined. At block 606, the applications can be ranked based at least in part on one or more criteria. At block 608, the ranked applications can be provided as a set of options for sharing the content item. A user operating the computing device is able to select at least one of the options to share the content item through the application associated with the option.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 7** illustrates a network diagram of an example system 700 that can be utilized in various scenarios, in accordance with an embodiment of the present disclosure. The system 700 includes one or more user devices 710, one or more external systems 720, a social networking system (or service) 730, and a network 750. In an embodiment, the social networking service, provider, and/or system discussed in connection with the embodiments described above may be implemented as the social networking system 730. For purposes of illustration, the embodiment of the system 700, shown by **FIGURE 7****,** includes a single external system 720 and a single user device 710. However, in other embodiments, the system 700 may include more user devices 710 and/or more external systems 720. In certain embodiments, the social networking system 730 is operated by a social network provider, whereas the external systems 720 are separate from the social networking system 730 in that they may be operated by different entities. In various embodiments, however, the social networking system 730 and the external systems 720 operate in conjunction to provide social networking services to users (or members) of the social networking system 730. In this sense, the social networking system 730 provides a platform or backbone, which other systems, such as external systems 720, may use to provide social networking services and functionalities to users across the Internet.

The user device 710 comprises one or more computing devices (or systems) that can receive input from a user and transmit and receive data via the network 750. In one embodiment, the user device 710 is a conventional computer system executing, for example, a Microsoft Windows compatible operating system (OS), Apple OS X, and/or a Linux distribution. In another embodiment, the user device 710 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 710 is configured to communicate via the network 750. The user device 710 can execute an application, for example, a browser application that allows a user of the user device 710 to interact with the social networking system 730. In another embodiment, the user device 710 interacts with the social networking system 730 through an application programming interface (API) provided by the native operating system of the user device 710, such as iOS and ANDROID. The user device 710 is configured to communicate with the external system 720 and the social networking system 730 via the network 750, which may comprise any combination of local area and/or wide area networks, using wired and/or wireless communication systems.

In one embodiment, the network 750 uses standard communications technologies and protocols. Thus, the network 750 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 750 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 750 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 710 may display content from the external system 720 and/or from the social networking system 730 by processing a markup language document 714 received from the external system 720 and from the social networking system 730 using a browser application 712. The markup language document 714 identifies content and one or more instructions describing formatting or presentation of the content. By executing the instructions included in the markup language document 714, the browser application 712 displays the identified content using the format or presentation described by the markup language document 714. For example, the markup language document 714 includes instructions for generating and displaying a web page having multiple frames that include text and/or image data retrieved from the external system 720 and the social networking system 730. In various embodiments, the markup language document 714 comprises a data file including extensible markup language (XML) data, extensible hypertext markup language (XHTML) data, or other markup language data. Additionally, the markup language document 714 may include JavaScript Object Notation (JSON) data, JSON with padding (JSONP), and JavaScript data to facilitate data-interchange between the external system 720 and the user device 710. The browser application 712 on the user device 710 may use a JavaScript compiler to decode the markup language document 714.

The markup language document 714 may also include, or link to, applications or application frameworks such as FLASH™ or Unity™ applications, the Silverlight™ application framework, etc.

In one embodiment, the user device 710 also includes one or more cookies 716 including data indicating whether a user of the user device 710 is logged into the social networking system 730, which may enable modification of the data communicated from the social networking system 730 to the user device 710.

The external system 720 includes one or more web servers that include one or more web pages 722a, 722b, which are communicated to the user device 710 using the network 750. The external system 720 is separate from the social networking system 730. For example, the external system 720 is associated with a first domain, while the social networking system 730 is associated with a separate social networking domain. Web pages 722a, 722b, included in the external system 720, comprise markup language documents 714 identifying content and including instructions specifying formatting or presentation of the identified content. As discussed previously, it should be appreciated that there can be many variations or other possibilities.

The social networking system 730 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 730 may be administered, managed, or controlled by an operator. The operator of the social networking system 730 may be a human being, an automated application, or a series of applications for managing content, regulating policies, and collecting usage metrics within the social networking system 730. Any type of operator may be used.

Users may join the social networking system 730 and then add connections to any number of other users of the social networking system 730 to whom they desire to be connected. As used herein, the term "friend" refers to any other user of the social networking system 730 to whom a user has formed a connection, association, or relationship via the social networking system 730. For example, in an embodiment, if users in the social networking system 730 are represented as nodes in the social graph, the term "friend" can refer to an edge formed between and directly connecting two user nodes.

Connections may be added explicitly by a user or may be automatically created by the social networking system 730 based on common characteristics of the users (e.g., users who are alumni of the same educational institution). For example, a first user specifically selects a particular other user to be a friend. Connections in the social networking system 730 are usually in both directions, but need not be, so the terms "user" and "friend" depend on the frame of reference. Connections between users of the social networking system 730 are usually bilateral ("two-way"), or "mutual," but connections may also be unilateral, or "one-way." For example, if Bob and Joe are both users of the social networking system 730 and connected to each other, Bob and Joe are each other's connections. If, on the other hand, Bob wishes to connect to Joe to view data communicated to the social networking system 730 by Joe, but Joe does not wish to form a mutual connection, a unilateral connection may be established. The connection between users may be a direct connection; however, some embodiments of the social networking system 730 allow the connection to be indirect via one or more levels of connections or degrees of separation.

In addition to establishing and maintaining connections between users and allowing interactions between users, the social networking system 730 provides users with the ability to take actions on various types of items supported by the social networking system 730. These items may include groups or networks (i.e., social networks of people, entities, and concepts) to which users of the social networking system 730 may belong, events or calendar entries in which a user might be interested, computer-based applications that a user may use via the social networking system 730, transactions that allow users to buy or sell items via services provided by or through the social networking system 730, and interactions with advertisements that a user may perform on or off the social networking system 730. These are just a few examples of the items upon which a user may act on the social networking system 730, and many others are possible. A user may interact with anything that is capable of being represented in the social networking system 730 or in the external system 720, separate from the social networking system 730, or coupled to the social networking system 730 via the network 750.

The social networking system 730 is also capable of linking a variety of entities. For example, the social networking system 730 enables users to interact with each other as well as external systems 720 or other entities through an API, a web service, or other communication channels. The social networking system 730 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 730. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 730 modifies edges connecting the various nodes to reflect the relationships and interactions.

The social networking system 730 also includes user-generated content, which enhances a user's interactions with the social networking system 730. User-generated content may include anything a user can add, upload, send, or "post" to the social networking system 730. For example, a user communicates posts to the social networking system 730 from a user device 710. Posts may include data such as status updates or other textual data, location information, images such as photos, videos, links, music or other similar data and/or media. Content may also be added to the social networking system 730 by a third party. Content "items" are represented as objects in the social networking system 730. In this way, users of the social networking system 730 are encouraged to communicate with each other by posting text and content items of various types of media through various communication channels. Such communication increases the interaction of users with each other and increases the frequency with which users interact with the social networking system 730.

The social networking system 730 includes a web server 732, an API request server 734, a user profile store 736, a connection store 738, an action logger 740, an activity log 742, and an authorization server 744. In an embodiment of the invention, the social networking system 730 may include additional, fewer, or different components for various applications. Other components, such as network interfaces, security mechanisms, load balancers, failover servers, management and network operations consoles, and the like are not shown so as to not obscure the details of the system.

The user profile store 736 maintains information about user accounts, including biographic, demographic, and other types of descriptive information, such as work experience, educational history, hobbies or preferences, location, and the like that has been declared by users or inferred by the social networking system 730. This information is stored in the user profile store 736 such that each user is uniquely identified. The social networking system 730 also stores data describing one or more connections between different users in the connection store 738. The connection information may indicate users who have similar or common work experience, group memberships, hobbies, or educational history. Additionally, the social networking system 730 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 730, such as non-person entities, buckets, cluster centers, images, interests, pages, external systems, concepts, and the like are also stored in the connection store 738.

The social networking system 730 maintains data about objects with which a user may interact. To maintain this data, the user profile store 736 and the connection store 738 store instances of the corresponding type of objects maintained by the social networking system 730. Each object type has information fields that are suitable for storing information appropriate to the type of object. For example, the user profile store 736 contains data structures with fields suitable for describing a user's account and information related to a user's account. When a new object of a particular type is created, the social networking system 730 initializes a new data structure of the corresponding type, assigns a unique object identifier to it, and begins to add data to the object as needed. This might occur, for example, when a user becomes a user of the social networking system 730, the social networking system 730 generates a new instance of a user profile in the user profile store 736, assigns a unique identifier to the user account, and begins to populate the fields of the user account with information provided by the user.

The connection store 738 includes data structures suitable for describing a user's connections to other users, connections to external systems 720 or connections to other entities. The connection store 738 may also associate a connection type with a user's connections, which may be used in conjunction with the user's privacy setting to regulate access to information about the user. In an embodiment of the invention, the user profile store 736 and the connection store 738 may be implemented as a federated database.

Data stored in the connection store 738, the user profile store 736, and the activity log 742 enables the social networking system 730 to generate the social graph that uses nodes to identify various objects and edges connecting nodes to identify relationships between different objects. For example, if a first user establishes a connection with a second user in the social networking system 730, user accounts of the first user and the second user from the user profile store 736 may act as nodes in the social graph. The connection between the first user and the second user stored by the connection store 738 is an edge between the nodes associated with the first user and the second user. Continuing this example, the second user may then send the first user a message within the social networking system 730. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 730 (or, alternatively, in an image maintained by another system outside of the social networking system 730). The image may itself be represented as a node in the social networking system 730. This tagging action may create edges between the first user and the second user as well as create an edge between each of the users and the image, which is also a node in the social graph. In yet another example, if a user confirms attending an event, the user and the event are nodes obtained from the user profile store 736, where the attendance of the event is an edge between the nodes that may be retrieved from the activity log 742. By generating and maintaining the social graph, the social networking system 730 includes data describing many different types of objects and the interactions and connections among those objects, providing a rich source of socially relevant information.

The web server 732 links the social networking system 730 to one or more user devices 710 and/or one or more external systems 720 via the network 750. The web server 732 serves web pages, as well as other web-related content, such as Java, JavaScript, Flash, XML, and so forth. The web server 732 may include a mail server or other messaging functionality for receiving and routing messages between the social networking system 730 and one or more user devices 710. The messages can be instant messages, queued messages (e.g., email), text and SMS messages, or any other suitable messaging format.

The API request server 734 allows one or more external systems 720 and user devices 710 to call access information from the social networking system 730 by calling one or more API functions. The API request server 734 may also allow external systems 720 to send information to the social networking system 730 by calling APIs. The external system 720, in one embodiment, sends an API request to the social networking system 730 via the network 750, and the API request server 734 receives the API request. The API request server 734 processes the request by calling an API associated with the API request to generate an appropriate response, which the API request server 734 communicates to the external system 720 via the network 750. For example, responsive to an API request, the API request server 734 collects data associated with a user, such as the user's connections that have logged into the external system 720, and communicates the collected data to the external system 720. In another embodiment, the user device 710 communicates with the social networking system 730 via APIs in the same manner as external systems 720.

The action logger 740 is capable of receiving communications from the web server 732 about user actions on and/or off the social networking system 730. The action logger 740 populates the activity log 742 with information about user actions, enabling the social networking system 730 to discover various actions taken by its users within the social networking system 730 and outside of the social networking system 730. Any action that a particular user takes with respect to another node on the social networking system 730 may be associated with each user's account, through information maintained in the activity log 742 or in a similar database or other data repository. Examples of actions taken by a user within the social networking system 730 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 730, the action is recorded in the activity log 742. In one embodiment, the social networking system 730 maintains the activity log 742 as a database of entries. When an action is taken within the social networking system 730, an entry for the action is added to the activity log 742. The activity log 742 may be referred to as an action log.

Additionally, user actions may be associated with concepts and actions that occur within an entity outside of the social networking system 730, such as an external system 720 that is separate from the social networking system 730. For example, the action logger 740 may receive data describing a user's interaction with an external system 720 from the web server 732. In this example, the external system 720 reports a user's interaction according to structured actions and objects in the social graph.

Other examples of actions where a user interacts with an external system 720 include a user expressing an interest in an external system 720 or another entity, a user posting a comment to the social networking system 730 that discusses an external system 720 or a web page 722a within the external system 720, a user posting to the social networking system 730 a Uniform Resource Locator (URL) or other identifier associated with an external system 720, a user attending an event associated with an external system 720, or any other action by a user that is related to an external system 720. Thus, the activity log 742 may include actions describing interactions between a user of the social networking system 730 and an external system 720 that is separate from the social networking system 730.

The authorization server 744 enforces one or more privacy settings of the users of the social networking system 730. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 720, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 720. One embodiment allows the specification of the set of entities to comprise an enumeration of entities. For example, the user may provide a list of external systems 720 that are allowed to access certain information. Another embodiment allows the specification to comprise a set of entities along with exceptions that are not allowed to access the information. For example, a user may allow all external systems 720 to access the user's work information, but specify a list of external systems 720 that are not allowed to access the work information. Certain embodiments call the list of exceptions that are not allowed to access certain information a "block list". External systems 720 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 744 contains logic to determine if certain information associated with a user can be accessed by a user's friends, external systems 720, and/or other applications and entities. The external system 720 may need authorization from the authorization server 744 to access the user's more private and sensitive information, such as the user's work phone number. Based on the user's privacy settings, the authorization server 744 determines if another user, the external system 720, an application, or another entity is allowed to access information associated with the user, including information about actions taken by the user.

In some embodiments, the social networking system 730 can include a content sharing module 746. The content sharing module 746 can, for example, be implemented as the content sharing module 102 of FIGURE 1. As discussed previously, it should be appreciated that there can be many variations or other possibilities.

### HARDWARE IMPLEMENTATION

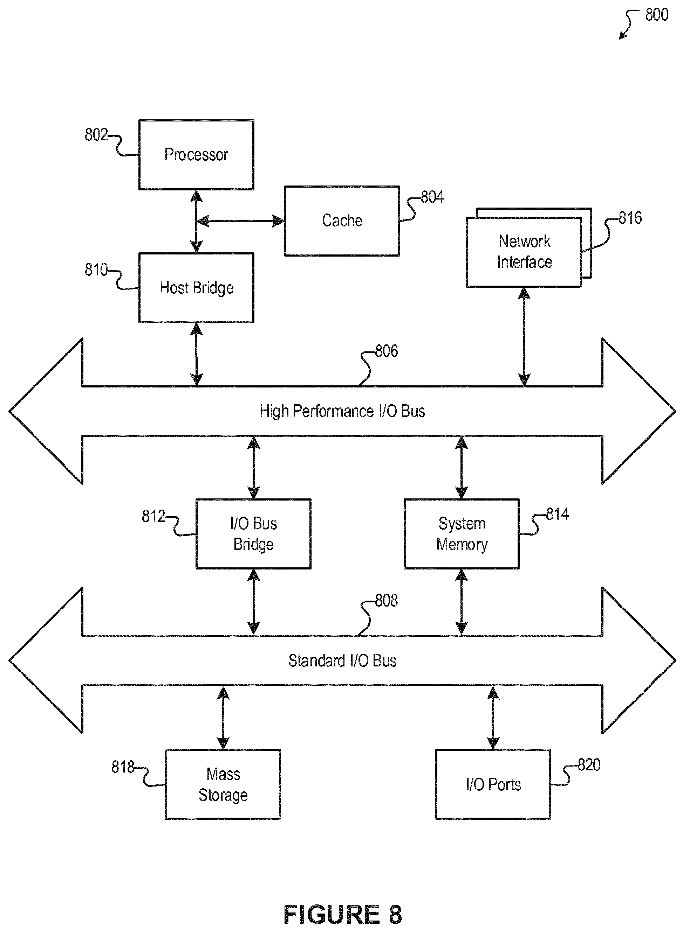

The foregoing processes and features can be implemented by a wide variety of machine and computer system architectures and in a wide variety of network and computing environments. **FIGURE 8** illustrates an example of a computer system 800 that may be used to implement one or more of the embodiments described herein in accordance with an embodiment of the invention. The computer system 800 includes sets of instructions for causing the computer system 800 to perform the processes and features discussed herein. The computer system 800 may be connected (e.g., networked) to other machines. In a networked deployment, the computer system 800 may operate in the capacity of a server machine or a client machine in a client-server network environment, or as a peer machine in a peer-to-peer (or distributed) network environment. In an embodiment of the invention, the computer system 800 may be the social networking system 730, the user device 710, and the external system 820, or a component thereof. In an embodiment of the invention, the computer system 800 may be one server among many that constitutes all or part of the social networking system 730.

The computer system 800 includes a processor 802, a cache 804, and one or more executable modules and drivers, stored on a computer-readable medium, directed to the processes and features described herein. Additionally, the computer system 800 includes a high performance input/output (I/O) bus 806 and a standard I/O bus 808. A host bridge 810 couples processor 802 to high performance I/O bus 806, whereas I/O bus bridge 812 couples the two buses 806 and 808 to each other. A system memory 814 and one or more network interfaces 816 couple to high performance I/O bus 806. The computer system 800 may further include video memory and a display device coupled to the video memory (not shown). Mass storage 818 and I/O ports 820 couple to the standard I/O bus 808. The computer system 800 may optionally include a keyboard and pointing device, a display device, or other input/output devices (not shown) coupled to the standard I/O bus 808. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 800, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, California, UNIX operating systems, Microsoft® Windows® operating systems, BSD operating systems, and the like. Other implementations are possible.

The elements of the computer system 800 are described in greater detail below. In particular, the network interface 816 provides communication between the computer system 800 and any of a wide range of networks, such as an Ethernet (e.g., IEEE 802.3) network, a backplane, etc. The mass storage 818 provides permanent storage for the data and programming instructions to perform the above-described processes and features implemented by the respective computing systems identified above, whereas the system memory 814 (e.g., DRAM) provides temporary storage for the data and programming instructions when executed by the processor 802. The I/O ports 820 may be one or more serial and/or parallel communication ports that provide communication between additional peripheral devices, which may be coupled to the computer system 800.

The computer system 800 may include a variety of system architectures, and various components of the computer system 800 may be rearranged. For example, the cache 804 may be on-chip with processor 802. Alternatively, the cache 804 and the processor 802 may be packed together as a "processor module", with processor 802 being referred to as the "processor core". Furthermore, certain embodiments of the invention may neither require nor include all of the above components. For example, peripheral devices coupled to the standard I/O bus 808 may couple to the high performance I/O bus 806. In addition, in some embodiments, only a single bus may exist, with the components of the computer system 800 being coupled to the single bus. Moreover, the computer system 800 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 800 that, when read and executed by one or more processors, cause the computer system 800 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 800, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 802. Initially, the series of instructions may be stored on a storage device, such as the mass storage 818. However, the series of instructions can be stored on any suitable computer readable storage medium. Furthermore, the series of instructions need not be stored locally, and could be received from a remote storage device, such as a server on a network, via the network interface 816. The instructions are copied from the storage device, such as the mass storage 818, into the system memory 814 and then accessed and executed by the processor 802. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 800 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
determining, by a computing device, at least one content item to be shared;
determining, by the computing device, one or more applications to share the content item;
ranking, by the computing device, the applications based at least in part on one or more criteria; and
providing, by the computing device, the ranked applications as a set of options for sharing the content item, wherein a user operating the computing device is able to select at least one of the options to share the content item through the application associated with the option.

2. The computer-implemented method of claim 1, wherein determining, by the computing device, the content item to be shared with the entity further comprises:
determining, by the computing device, that the user operating the computing device has selected an option to share the content item, wherein the option is provided through an interface of an application executing on the computing device.

3. The computer-implemented method of claim 1 or 2, wherein ranking, by the computing device, the applications based at least in part on one or more criteria further comprises:
analyzing, by the computing device, subject matter represented in the content item to be shared;
determining, by the computing device, that a first application in the one or more applications is preferred for sharing content items based at least in part on the analyzed subject matter; and
ranking, by the computing device, the first application higher than other applications in the one or more applications.

4. The computer-implemented method of claim 3, wherein the subject matter is a representation of at least one entity, and wherein the method further comprises:
providing, by the computing device, a respective name of the at least one entity as a suggested recipient of the content item; and/or
wherein the method further comprises:
providing, by the computing device, text to be communicated with the content item, the text being determined based at least in part on the analyzed subject matter; and/or
wherein determining, by the computing device, that the first application in the one or more applications is preferred for sharing content items further comprises:
determining, by the computing device, a preference for the first application as specified by the user operating the computing device, or
determining, by the computing device, that a number of times that the user operating the computing device has launched the first application to share content items satisfies a threshold value.

5. The computer-implemented method of any of claims 1 to 4, wherein ranking, by the computing device, the applications based at least in part on one or more criteria further comprises:
determining, by the computing device, a respective count for each application in the one or more applications, the respective count indicating a number of times that the user operating the computing device has launched the application to share content items; and
ranking, by the computing device, the applications based at least in part on the respective counts.

6. The computer-implemented method of any of claims 1 to 5, wherein ranking, by the computing device, the applications based at least in part on one or more criteria further comprises:
determining, by the computing device, a content type corresponding to the content item to be shared;
determining, by the computing device, a respective count for each application in the one or more applications, the respective count indicating a number of times that the user operating the computing device has launched the application to share content items that correspond to the content type; and
ranking, by the computing device, the applications based at least in part on the respective counts.

7. The computer-implemented method of any of claims 1 to 6, wherein ranking, by the computing device, the applications based at least in part on one or more criteria further comprises:
determining, by the computing device, a geo fence corresponding to the computing device from which the content item is being shared;
determining, by the computing device, that a first application in the one or more applications is used to share content items while the computing device is in the geo fence; and
ranking, by the computing device, the first application higher than other applications in the one or more applications.

8. The computer-implemented method of any of claims 1 to 7, wherein ranking, by the computing device, the applications based at least in part on one or more criteria further comprises:
determining, by the computing device, a time of day at which the content item is being shared;
determining, by the computing device, that a first application in the one or more applications is used to share content items during the time of day; and
ranking, by the computing device, the first application higher than other applications in the one or more applications.

9. A system comprising:
at least one processor; and
a memory storing instructions that, when executed by the at least one processor, cause the system to perform:
determining at least one content item to be shared;
determining one or more applications to share the content item;
ranking the applications based at least in part on one or more criteria; and
providing the ranked applications as a set of options for sharing the content item, wherein a user operating the computing device is able to select at least one of the options to share the content item through the application associated with the option.

10. The system of claim 9, wherein determining the content item to be shared with the entity further causes the system to perform:
determining that the user operating the computing device has selected an option to share the content item, wherein the option is provided through an interface of an application executing on the computing device.

11. The system of claim 9 or 10, wherein ranking the applications based at least in part on one or more criteria further causes the system to perform:
analyzing subject matter represented in the content item to be shared;
determining that a first application in the one or more applications is preferred for sharing content items based at least in part on the analyzed subject matter; and
ranking the first application higher than other applications in the one or more applications.

12. The system of claim 11, wherein the subject matter is a representation of at least one entity, and wherein the system further performs:
providing a respective name of the at least one entity as a suggested recipient of the content item; and/or
wherein the system further performs:
providing text to be communicated with the content item, the text being determined based at least in part on the analyzed subject matter.

13. A non-transitory computer-readable storage medium including instructions that, when executed by at least one processor of a computing system, cause the computing system to perform a method comprising:
determining at least one content item to be shared;
determining one or more applications to share the content item;
ranking the applications based at least in part on one or more criteria; and
providing the ranked applications as a set of options for sharing the content item, wherein a user operating the computing device is able to select at least one of the options to share the content item through the application associated with the option.

14. The non-transitory computer-readable storage medium of claim 13, wherein determining the content item to be shared with the entity further causes the computing system to perform:
determining that the user operating the computing device has selected an option to share the content item, wherein the option is provided through an interface of an application executing on the computing device.

15. The non-transitory computer-readable storage medium of claim 13 or 14, wherein ranking the applications based at least in part on one or more criteria further causes the computing system to perform:
analyzing subject matter represented in the content item to be shared;
determining that a first application in the one or more applications is preferred for sharing content items based at least in part on the analyzed subject matter; and
ranking the first application higher than other applications in the one or more applications;
preferably wherein the subject matter is a representation of at least one entity, and wherein the computing system further performs:
providing a respective name of the at least one entity as a suggested recipient of the content item; and/or
preferably wherein the computing system further performs:
providing text to be communicated with the content item, the text being determined based at least in part on the analyzed subject matter.
